# EUROPEAN PATENT APPLICATION

(11) **EP 4 564 765 A1**
(43) Date of publication of application: **04.06.2025**
(21) Application number: 23845951.5
(22) Date of filing: 12.05.2023
(51) Int. Cl.: H04L 41/0654

(54) **TRANSMISSION/RECEPTION DEVICE AND CONTROL SYSTEM**

(30) Priority: 28.07.2022 JP 2022120933
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: HIRANO, Tatsuma, Kawasaki-shi, Kanagawa 212-0013 (JP); MATSUYAMA, Hiroki, Kawasaki-shi, Kanagawa 212-0013 (JP); OHNISHI, Naoya, Kawasaki-shi, Kanagawa 212-0013 (JP); NAKATANI, Hiroshi, Kawasaki-shi, Kanagawa 212-0013 (JP); TAKAYANAGI, Yoichi, Kawasaki-shi, Kanagawa 212-0013 (JP); OKABE, Motohiko, Kawasaki-shi, Kanagawa 212-0013 (JP)
(74) Representative: AWA Sweden AB
(86) International application number: PCT/JP2023/017921
(87) International publication number: WO 2024/024212

(57) **Abstract**

To provide a transmission/reception device capable of performing communication via a network more stably.

According to the present embodiment, a transmission/reception device includes a connecter and a determiner. The connecter is configured to establish a communication link with a communication counterpart via a network. The determiner is a determiner configured to determine a state of the communication link and to cause the connector to switch the communication link to be another communication link when the communication link is in a predetermined state.

## Description

### Field

The embodiments of the present invention relate to a transmission/reception device and a control system.

### Background

There has been considered a control system that executes sequence control or process control, which is executed by a PLC (Programmable Logic Controller) or the like, in a server device via a network such as the Internet. A control system in factories, industrial systems, and the like operates in real time with a certain period. In order to control the system to operate normally, it is required to transmit input/output data within a certain time even when a network delay or the like occurs.

### Citation List

### Patent Literature

Patent Literature 1: Japanese Patent No. 5959452

### Summary

### Technical Problem

However, since a communication band or a communication delay is not ensured in networks such as the Internet, there is a risk that targeted control cannot be executed within a certain period when the control is executed via a network. Also in a case where a plurality of server devices are used, an unexpected communication delay may occur and there is a risk that the control with a certain period cannot be executed. Further, even if congestion control or delivery confirmation of a TCP (Transmission Control Protocol) is used, there is a risk that communication with a constant period cannot be performed when a communication channel itself has a problem.

In order to solve such a problem, an object of the present embodiment is to provide a transmission/reception device and a control system capable of performing communication via a network more stably.

### Solution to Problem

According to the present embodiment, a transmission/reception device includes a connecter and a determiner. The connecter is configured to establish a communication link with a communication counterpart via a network. The determiner is a determiner configured to determine a state of the communication link and to cause the connector to switch the communication link to be another communication link when the communication link is in a predetermined state.

### Effect of the Invention

It is possible to perform communication via a network more stably.

### Brief Description of Drawings

[FIG. 1] FIG. 1 is a diagram illustrating a configuration example of a control system according to a first embodiment.
[FIG. 2] FIG. 2 is a table illustrating an example of connection information used by a connection manager.
[FIG. 3] FIG. 3 is a diagram illustrating a configuration example of an input signal packet transmitted by a transmission manager.
[FIG. 4] FIG. 4 is a table illustrating a method example in a case where connection information is referred to using a during-transmission flag.
[FIG. 5] FIG. 5 is a diagram illustrating a configuration example of a control system according to a second embodiment.

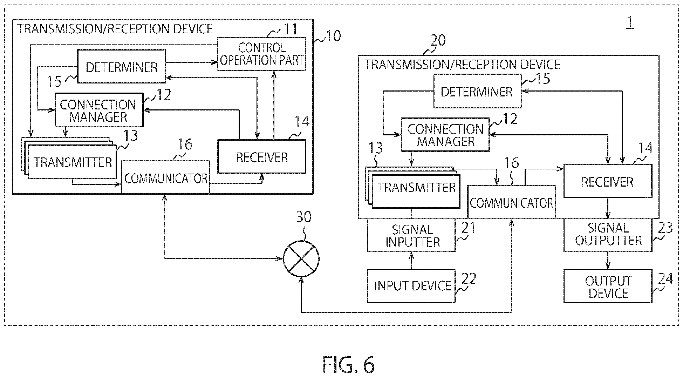

[FIG. 6] FIG. 6 is a diagram illustrating a configuration example of a control system according to a third embodiment.

### Description of Embodiments

A transmission/reception device and a control system according to embodiments of the present invention will be explained in detail below with reference to the drawings. The embodiments described below are only examples of the embodiments of the present invention and it is not to be interpreted that the present invention is limited to these embodiments. In the drawings referred to in the embodiments, same parts or parts having identical functions are denoted by like or similar reference signs and redundant explanations thereof may be omitted in some cases. Further, there are cases where dimensional ratios of the parts in the drawings are different from those of actual parts and some part of configurations is omitted from the drawings for the sake of explanations.

### (First embodiment)

### (Configuration)

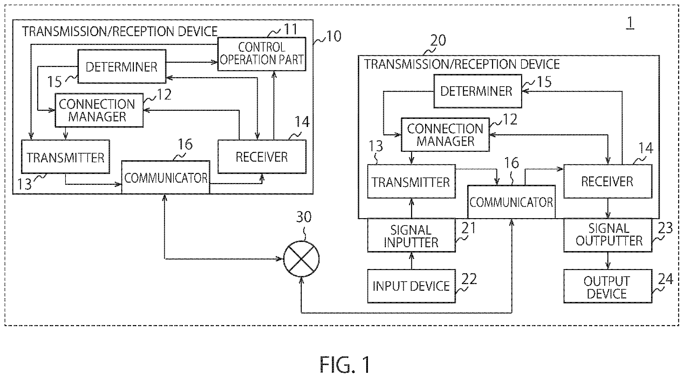

FIG. 1 is a diagram illustrating a configuration example of a control system according to a first embodiment. As illustrated in FIG. 1, a control system 1 includes a transmission/reception device 10 and a transmission/reception device 20. The transmission/reception device 10 and the transmission/reception device 20 are connected to each other via a network 30. That is, the transmission/reception device 10 is, for example, a server device, includes a CPU (Censral Processing Unis), a memory, a storage, and the like, and controls devices such as an actuator via the network 30 and the transmission/reception device 20. The transmission/reception device 20 is, for example, a communication device and includes a CPU (Censral Processing Unis), a memory, a storage, and the like.

An input device 22 inputs an input signal as data obtained from a sensor or the like that generates state information of devices such as an actuator. An output device 24 is, for example, a device such as an actuator as a control target of the transmission/reception device 10. That is, the transmission/reception device 10 generates an output signal for control according to the input signal obtained via the transmission/reception device 20 and the network 30. Subsequently, the transmission/reception device 10 outputs the output signal to the output device 24 via the network 30 and the transmission/reception device 20. The input signal according to the present embodiment corresponds to a first signal, and the output signal corresponds to a second signal.

While the network 30 is, for example, the Internet, the network 30 is not limited thereto. For example, a local communication line such as a LAN (Loacal Area Network), a wide-area wired communication line such as a WAN (Wide Area Network), or a wireless communication line of a communication standard such as 3G (Generation), 4G, or 5G may be also used for the network 30.

More specifically, the transmission/reception device 10 includes a control operation part 11, a connection manager 12, a transmitter 13, a receiver 14, a determiner 15, and a communicator 16. For example, the transmission/reception device 10 can configure the control operation part 11, the connection manager 12, the transmitter 13, the receiver 14, the communicator 16, and the determiner 15 by executing a program stored in the memory.

The transmission/reception device 20 includes a control operation part 11, a connection manager 12, a transmitter 13, a receiver 14, a communicator 16, a signal inputter 21, and a signal outputter 23. That is, the transmission/reception device 20 is different from the transmission/reception device 10 in that the transmission/reception device 20 further includes the signal inputter 21 and the signal outputter 23 and does not include the control operation part 11. For example, the transmission/reception device 20 can configure the control operation part 11, the connection manager 12, the transmitter 13, the receiver 14, the communicator 16, the signal inputter 21, and the signal outputter 23 by executing a program stored in the memory. In the following descriptions, the connection manager 12, the transmitter 13, the receiver 14, the communicator 16, and the determiner 15 included in the transmission/reception device 10 are described. Meanwhile, as for the connection manager 12, the transmitter 13, the receiver 14, the communicator 16, and the determiner 15 included in the transmission/reception device 20, differences from those included in the transmission/reception device 10 are described.

In the present embodiment, while descriptions are made assuming that the transmission/reception device 20 is a client requesting a connection in a TCP (Transmission Control Protocol) or the like and the transmission/reception device 10 is a server receiving the connection in the TCP or the like, the present embodiment is not limited thereto. For example, it is also permissible that the transmission/reception device 10 is a client requesting a connection in a TCP or the like and the transmission/reception device 20 is a server receiving the connection in the TCP or the like.

The control operation part 11 generates an output signal for control in the output device 2 according to an input signal.

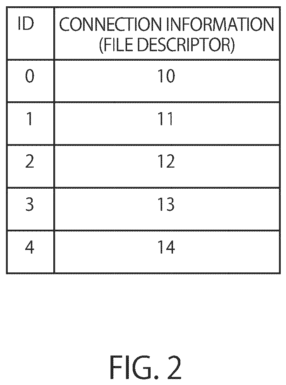

FIG. 2 is a table illustrating an example of connection information used by the connection manager 12. As illustrated in FIG. 2, the connection information is a unique number assigned to one device that performs transmission. ID0 to ID4 correspond to individual transmitters or individual communication devices. For example, 10 to 14 are assigned to ID0 to ID4 as connection information, respectively. That is, for example, each of ID0 to ID4 according to the present embodiment can correspond to an independent transmitter or an independent communication device. Accordingly, while the transmission/reception device 20 according to the present embodiment is one device, communication processing equivalent to communication processing for a plurality of communication devices or a plurality of transmitters can be performed to the transmission/reception device 20. The connection manager 12 according to the present embodiment corresponds to a connector.

Communication between the transmission/reception device 10 and the transmission/reception device 20 can be established, for example, in a TCP (Transmission Control Protocol). The connection manager 12 of the transmission/reception device 10 receives a connection request from the connection manager 12 of the transmission/reception device 20 via the network 30. When connection processing is performed normally, the transmission/reception device 10 makes a connection response to the transmission/reception device 20 via the network 30. Further, for example, the transmission/reception device 10 holds connection information to be used for communication allocated by an OS or the like, such as a file descriptor of a Socket as illustrated in FIG. 2. For example, the connection manager 12 of the transmission/reception device 20 having received the connection response from the transmission/reception device 10 holds connection information to be used for communication allocated by an OS or the like, such as a file descriptor of a Socket as illustrated in FIG. 2.

With this configuration, the transmission/reception device 10 and the transmission/reception device 20 can mutually hold connection information to be used for communication and communication using this connection information 10 is established between the transmission/reception device 10 and the transmission/reception device 20. In the present embodiment, a communication path established between the transmission/reception device 10 and the transmission/reception device 20 via the network 30 is referred to as "communication link".

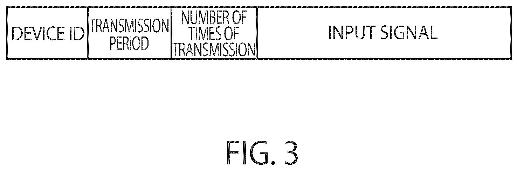

FIG. 3 is a diagram illustrating a configuration example of an input signal packet transmitted by the connection manager 12 of the transmission/reception device 20. The input signal packet is composed of a device ID as an identification number of a communication device, a transmission period indicating what period number the relevant transmission is, the number of times of transmission indicating how many times transmission has been made in the same period, and data of an input signal.

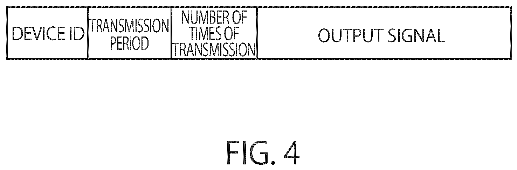

FIG. 4 is a diagram illustrating a configuration example of an output signal packet transmitted by the connection manager 12 of the transmission/reception device 10. An output signal packet and an input signal packet have the same configuration. That is, there is a difference between these signal packets in that whereas an input signal packet includes an input signal, an output signal packet includes an output signal. In this manner, an output signal packet is composed of a device ID as an identification number of a communication device, a transmission period indicating what period number the relevant transmission is, the number of times of transmission indicating how many times transmission has been made in the same period, and data of an output signal.

The connection manager 12 of the transmission/reception device 10 and that of the transmission/reception device 20 increment a transmission period when a signal is transmitted in the next period. When the same transmission signal is consecutively transmitted in the same period, the connection manager 12 can store the same value in the transmission period and increment the number of times of transmission. In this case, when a signal is transmitted in the next period, the connection manager 12 can increment the transmission period and return the number of times of transmission to an initial value.

The transmitter 13 in the transmission/reception device 10 causes an output supplied from the control operation part 11 to be included in an output signal packet (see FIG. 4) supplied from the connection manager 12 and subsequently supplies the output signal packet to the communicator 16. Meanwhile, the transmitter 13 in the transmission/reception device 20 causes an input signal supplied from the signal inputter 21 to be included in an input signal packet (see FIG. 3) supplied from the connection manager 12 and subsequently supplies the input signal packet to the communicator 16.

The receiver 14 in the transmission/reception device 10 supplies information related to an input signal packet supplied from the communicator 16 to the control operation part 11, the connection manager 12, and the determiner 15. Meanwhile, the receiver 14 in the transmission/reception device 20 supplies to the connection manager 12, the determiner 15, and the signal outputter 23. Particularly, the receiver 14 in the transmission/reception device 20 outputs an output signal included in an output signal packet to the signal outputter 23.

The determiner 15 determines a state of communication between the transmission/reception device 10 and the transmission/reception device 20 based on the state of a signal received by the receiver 14. Details of the determiner 15 are described later.

The communicator 16 in the transmission/reception device 10 performs communication with the communicator 16 in the transmission/reception device 20 via a network interface. Similarly, the communicator 16 in the transmission/reception device 10 performs communication with the communicator 16 in the transmission/reception device 20 via a network interface.

The transmission/reception device 10 may be a physical server, or may be a virtualized server or a cloud server. A protocol for receiving a connection in the connection manager 12 is not limited to a TCP (Transmission Control Protocol) but also may be a TCP-based protocol such an HTTP (Hypertext Transfer Protocol), HTTPS (Hypertext Transfer Protocol Secure), or MQTT (Message Queueing Telemetry Transport), or a UDP-based protocol such as QUIC or MQTT-SN (MQTT for Sensor Networks). The transmitter 13 and the receiver 14 may be allocated to different threads in the OS and be operated parallelly. QUIC is one of communication rules (protocols) used on IP networks such as the Internet and is aimed at both high-speed performance and security.

The output device 24 may be an IO module that transfers an output signal to devices such as an actuator. Alternatively, the output device 24 may be a module that transfers an input signal or an output signal to an IO module. Furthermore, the transmission method in the network 30 may be a method via a network, a fieldbus, or the like, or may be a method via an ASIC, an FPGA, or the like. The foregoing is explanations of the configuration of the control system 1 according to the first embodiment, and operations thereof are described below.

### (Actions)

More specific operation examples of the control system 1 according to the first embodiment are described. First, the connection manager 12 of the transmission/reception device 10 and the connection manager 12 of the transmission/reception device 20 establish a communication link in a TCP. The both connection managers 12 hold, as connection information, a file descriptor (see FIGS. 3 and 4) as an identifier used for communication with, for example, a socket or the like. The connection managers 12 may further hold a pair of an IP address and a MAC address (Media Access Control address) and the like.

After the connection manager 12 of the transmission/reception device 10 and the connection manager 12 of the transmission/reception device 20 have established a communication link, periodic communication is performed using HTTPS (Hypertext Transfer Protocol Secure), for example. For example, in the transmission/reception device 10, the control operation part 11 sends an output signal as control information to the transmitter 13 with a transmission period at a 100-ms interval. The transmitter 13 then creates an output signal packet (see FIG. 4) and transmits the output signal packet to the transmission/reception device 20 via the communicator 16. For example, the output signal packet may be composed of an HTTP RESPONSE frame. It is possible that a serial number of data is included in the BODY of the HTTP RESPONSE frame. For example, when the communication line has one route, the connection information (see FIG. 2) is 10, and the number of times of transmission is fixed as one, information of (the connection information, the transmission period, the number of times of transmission) (see FIG. 4) can be assigned to the data head of each output signal packet as (10,0,1), (10,1,1), (10,2,1), (10,3,1), (10,4,1), (10,5,1), (10,6,1), (10,7,1), (10,8,1), and (10,9,1) with the transmission period regarded as serial numbers of data.

Meanwhile, in the transmission/reception device 20, the signal inputter 21 sends an input signal to the transmitter 13 with a transmission period at a 50-ms interval. The transmitter 13 then creates an input signal packet (see FIG. 3) and transmits data including the input signal to the transmission/reception device 10 via the communicator 16. For example, the input signal packet may be composed of an HTTP POST frame. It is possible that a serial number of data is included in the BODY of the HTTP POST frame. For example, when the communication line has one route, the connection information (see FIG. 2) is 10, and the number of times of transmission is fixed as one, information of (the connection information, the transmission period, the number of times of transmission) (see FIG. 2) can be assigned to the data head of each input signal packet as (10,0,1), (10,1,1), (10,2,1), (10,3,1), (10,4,1), (10,5,1), (10,6,1), (10,7,1), (10,8,1), and (10,9,1) with the transmission period regarded as serial numbers of data.

The receiver 14 of the transmission/reception device 10 receives, via the communicator 15, an input signal packet having been transmitted from the transmission/reception device 20. The receiver 14 supplies an input signal included in the received input signal packet to the control operation part 11. Subsequently, the control operation part 11 sends an output signal as a control operation result with respect to the input signal to the transmitter 13. The transmitter 13 then creates an output signal packet (see FIG. 4) and transmits data including the output signal to the transmission/reception device 20 via the communicator 16.

As described above, the transmission/reception device 10 transmits an output signal packet to the transmission/reception device 20 periodically, and the transmission/reception device 20 transmits an input signal packet to the transmission/reception device 10 periodically. Therefore, as far as there is no problem on the network 30, the communicator 16, and the like, the transmission/reception device 10 receives an input signal packet periodically and the transmission/reception device 20 receives an output signal packet periodically. However, when there is any failure on the network 30, the communicator 16, and the like, even if the transmission/reception device 10 and the transmission/reception device 20 transmit a signal packet to each other periodically, the transmission/reception device 10 and the transmission/reception device 20 become incapable of receiving the signal packet periodically. In the following descriptions, determination methods 1 to 3 of the determiner 15 to determine a state of at least either the network 30 or the communicator 16 are described.

### (Determination method 1)

The determiner 15 of the transmission/reception device 10 receives a reception history from the receiver 14. This reception history includes a history of reception clock times of input signal packets, for example. The determiner 15 of the transmission/reception device 10 counts the number of occurred events where the interval between reception clock times of two serially-numbered input signal packets exceeds a predetermined time. For example, since input signal packets are transmitted at a 50-ms interval, the determiner 15 of the transmission/reception device 10 sets 100 ms, which is twice the value of the transmission interval, as a threshold and counts the number of times that the reception interval exceeds 100 ms. Subsequently, when the number of times that the reception interval exceeds 100 ms exceeds ten within one minute, the determiner 15 of the transmission/reception device 10 determines that at least either the network 30 or the communicator 16 has abnormality. When the occurrence ratio of events where the reception interval exceeds 100 ms exceeds 10% within one minute, the determiner 15 of the transmission/reception device 10 determines that at least either the network 30 or the communicator 16 has abnormality.

### (Determination method 2)

To the determiner 15 of the transmission/reception device 10, the transmitter 13 transmits an output signal packet and, for example, response data including header information of the output signal packet is transmitted from the transmission/reception device 20. The reception history received from the receiver 14 includes the header information of the response data and a history of reception clock times. Accordingly, based on a time difference between a timing where the output signal packet has been transmitted and a timing where response data of the output signal packet has been received, the determiner 15 can determine the state of at least either the network 30 or the communicator 16. For example, as a threshold of the response time is set to be 500 ms, the determiner 15 determines that at least either the network 30 or the communicator 16 has abnormality when the number of times that the time difference exceeds the threshold of 500 ms exceeds ten within one minute.

### (Determination method 3)

The determiner 15 of the transmission/reception device 10 determines the state of the network 30 and that of the communicator 16 using serial numbers of data included in input signal packets. More specifically, using information of the transmission period of (the connection information, the transmission period, the number of times of transmission) (see FIG. 3), the determiner 15 of the transmission/reception device 10 determines the state of the network 30 and that of the communicator 16 based on the number of unreceived signal packets. For example, the determiner 15 determines that there is abnormality when the number of pieces of data missing within one minute exceeds ten. For example, when the data loss rate within one minute exceeds 10%, the determiner 15 determines that there is abnormality. A history of communication may be composed of driver information of devices that are used for communication performed by the communicator 16.

The threshold used by the determiner 15 may be decided by, for example, an abnormality determination learner having performed machine learning. The determiner 15 can also determine the state of the network 30 based also on information obtained via the network 30. For example, information determined as abnormal by the determiner 15 may be information obtained from outside of the transmission/reception device 10 via the network 30. For example, such information may be determined as abnormal by the determiner 15 based on, for example, information sent from an official RSS feed, e-mail services, or SNS of a cloud service in use. The determiner 15 may acquire information on an unofficial SNS and the like to determine such information as abnormal.

Next, when information is determined as abnormal by the determiner 15, the determiner 15 instructs the connection manager 12 to perform reconnection. With this instruction, there is a case in which the connection path of the network 30 is changed and its network environment is improved. Alternatively, there is a case in which a transmission cue or the like stored in the memory or the like of each of the transmission/reception devices 10 and 20 is reset and its network environment is improved.

When information is determined as abnormal, the determiner 15 can also notify an e-mail address specified in advance of occurrence of abnormality and its causes. The determiner 15 may also pop up a message box notifying occurrence of abnormality and its causes on a control screen (not illustrated). Further, when information is determined as abnormal, the determiner 15 may also control external LED lights or the like to illuminate the lights. Furthermore, when information is determined as abnormal, the determiner 15 may also control the control operation part 11 to generate an output signal for executing fail-safe control.

While operations of the determiner 15 of the transmission/reception device 10 have been described, similar determining operations can be performed in the determiner 15 of the transmission/reception device 20. That is, the determiner 15 of the transmission/reception device 20 makes determination according to the number of occurred events where a reception clock time interval of output signal packets exceeds a predetermined time, based on the reception history received from the receiver 14. The determiner 15 of the transmission/reception device 20 can also determine the state of at least either the network 30 or the communicator 16 based on a time difference between a timing where an input signal packet has been transmitted and a timing where response data of the input signal packet has been received. Furthermore, the determiner 15 of the transmission/reception device 20 can determine the state of the network 30 and that of the communicator 16 using serial numbers of data included in output signal packets.

### (Effects)

As described above, the determiner 15 has been described that it determines whether abnormality is occurring according to the state of communication, and reconnection is instructed to the connection manager 12 when it is determined there is abnormality. Accordingly, even if the state of communication is worsened due to a sudden communication delay or the like, it is possible to realize control with a constant period without any occurrence of delay or loss of control data due to change of the connection path of the network 30. Further, it is configured that when the determiner 15 determines there is abnormality, the abnormality is notified. Accordingly, an operator can ascertain that delay or trouble of data transmission is occurring.

### (Second embodiment)

While each of the transmission/reception device 10 and the transmission/reception device 20 includes a single transmitter 13 in the control system 1 according to the first embodiment, a control system 2 according to a second embodiment is different therefrom in that each of the transmission/reception device 10 and the transmission/reception device 20 includes a plurality of transmitters 13. In the following descriptions, differences from the control system 1 according to the first embodiment are described.

### (Configuration)

FIG. 4 is a diagram illustrating a configuration example of the control system 2 according to the second embodiment. Each of the transmission/reception device 10 and the transmission/reception device 20 includes two transmitters 13.

### (Action 1)

The connection manager 12 of the transmission/reception device 10 and the connection manager 12 of the transmission/reception device 20 establish a communication link for each of the two transmitters 13 of the transmission/reception device 10. For example, the connection information 11 (see FIG. 2) is assigned to any one of the two transmitters 13 and the connection information 12 (see FIG. 2) is assigned to the other one of the two transmitters 13.

The connection manger 12 of the transmission/reception device 10 uses, for example, the communication link to which the connection information 11 (see FIG. 2) is assigned for regular-use communication. Meanwhile, the communication link to which the connection information 12 (see FIG. 2) is assigned is designated as a stand-by communication link.

When the determiner 15 of the transmission/reception device 10 determines that the regular-use communication link has abnormality, the determiner 15 causes the connection manger 12 to switch the stand-by communication link to be a regular-use communication link.

### (Action 2)

The connection manager 12 of the transmission/reception device 10 uses, for example, both the communication link to which the connection information 11 (see FIG. 2) is assigned and the communication link to which the connection information 12 (see FIG. 2) is assigned for regular-use communication. Accordingly, the two transmitters 13 of the transmission/reception device 10 are used simultaneously to transmit output signal packets each including the same output signal to the transmission/reception device 20.

In the receiver 14 of the transmission/reception device 20, output signals in the output signal packets transmitted from a plurality of transmitters 13 are collated with one another. The output signals are applied and are output to the signal outputter 23 only when the output signals are the same.

When the output signals of the transmission/reception device 10 are not the same, the determiner 15 of the transmission/reception device 20 notifies, via the transmitter 13, the transmission/reception device 10 of the fact that the two transmitters 13 of the transmission/reception device 10 are not operating normally. While a using method of the two transmitters 13 of the transmission/reception device 10 has been described here, this method may be similarly used for the two transmitters 13 of the transmission/reception device 20.

### (Effects)

As described above, the connection manager 12 of the transmission/reception device 10 and the connection manager 12 of the transmission/reception device 20 establish a communication link for each of the two transmitters 13 of the transmission/reception device 10, and one communication link is used for regular-use communication and the other one is made to stand by. Accordingly, when the determiner 15 determines that the regular-use communication path has abnormality, the connection manager 12 can switch the stand-by communication path to be a regular-use communication path. Therefore, even if a sudden communication delay or the like occurs, it is possible to realize control with a constant period without any occurrence of delay or loss of control data.

The connection manager 12 of the transmission/reception device 10 establishes a communication link for each of the two transmitters 13, both the communication links are used for regular-use communication, and output signals included in both output signal packets are collated with each other. The output signals are applied and are output to the signal outputter 23 only when the output signals are the same. Accordingly, the accuracy of output signals can be further improved and it is possible to realize control taking functional safety of the output device 24 into consideration. Further, it becomes possible to detect problems on the two transmitters 13.

### (Third embodiment)

While in the control system 1 according to the first embodiment, each of the transmission/reception device 10 and the transmission/reception device 20 includes a single transmitter 13, the control system 2 according to the second embodiment is different therefrom in that each of the transmission/reception device 10 and the transmission/reception device 20 includes three transmitters 13. In the following descriptions, differences from the control system 1 according to the first embodiment are described.

### (Configuration)

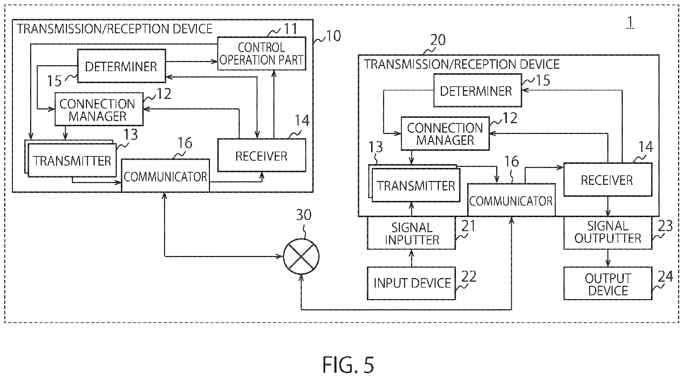

FIG. 5 is a diagram illustrating a configuration example of the control system 2 according to the third embodiment. Each of the reception device 10 and the transmission/reception device 20 includes three transmitters 13. While an example in which the transmission/reception devices 10 and 20 each include three transmitters 13 is described in the present embodiment, the third embodiment is not limited thereto. For example, the number of transmitters 13 may be four or more.

### (Action 1)

The connection manager 12 of the transmission/reception device 10 and the connection manager 12 of the transmission/reception device 20 establish a communication link for each of the three transmitters 13 of the transmission/reception device 10. For example, any of the connection information 11, the connection information 12, and the connection information 13 (see FIG. 2) is assigned to each of the three transmitters 13.

The connection manager 12 of the transmission/reception device 10 uses, for example, the communication link to which the connection information 11 (see FIG. 2) is assigned is used for regular-use communication. Meanwhile, the communication links to which the connection information 12 and the connection information 13 (see FIG. 2) are assigned are designated as stand-by communication links.

When the determiner 15 of the transmission/reception device 10 determines that the regular-use communication link has abnormality, the determiner 15 causes the connection manger 12 to switch one of the stand-by communication links to be a regular-use communication link.

### (Action 2)

The connection manager 12 of the transmission/reception device 10 uses, for example, both the communication link to which the connection information 11 (see FIG. 2) is assigned and the communication link to which the connection information 12 (see FIG. 2) is assigned for regular-use communication. Accordingly, two transmitters 13 of the transmission/reception device 10 are used simultaneously to transmit output signal packets each including the same output signal to the transmission/reception device 20. Meanwhile, the communication link to which the connection information 13 (see FIG. 2) is assigned is designated as a stand-by communication link.

In the receiver 14 of the transmission/reception device 20, output signals in output signal packets transmitted from a plurality of transmitters 13 are collated with one another. The output signals are applied and are output to the signal outputter 23 only when the output signals are the same.

When these output signals of the transmission/reception device 20 are not the same, the determiner 15 of the transmission/reception device 20 notifies, via the transmitter 13, the transmission/reception device 10 of the fact that two transmitters 13 of the transmission/reception device 10 are not operating normally.

When the determiner 15 of the transmission/reception device 10 determines that one of the regular-use communication links has abnormality, the determiner 15 causes the connection manger 12 to switch the stand-by communication link to be a regular-use communication link.

### (Action 3)

The connection manager 12 of the transmission/reception device 10 uses, for example, the communication links to which the connection information 11, the connection information 12, and the connection information 13 (see FIG. 2) are assigned for regular-use communication. Accordingly, the three transmitters 13 of the transmission/reception device 10 are used simultaneously to transmit output signal packets each including the same output signal to the transmission/reception device 20.

In the receiver 14 of the transmission/reception device 20, output signals in the output signal packets transmitted from the three transmitters 13 are collated with one another. The output signals are applied and are output to the signal outputter 23 only when two or more output signals are the same.

When the three output signals of the transmission/reception device 10 are not the same, the determiner 15 of the transmission/reception device 20 notifies, via the transmitter 13, the transmission/reception device 10 of the fact that, with an identifier identifying a transmitter 13 having transmitted an output signal that is not the same as other output signals, the relevant transmitter 13 is not operating normally. While a using method of two transmitters 13 of the transmission/reception device 10 has been described here, this method may be similarly used for two transmitters 13 of the transmission/reception device 20.

### (Effects)

As described above, the connection manager 12 of the transmission/reception device 10 and the connection manager 12 of the transmission/reception device 20 establish a communication link for each of the three transmitters 13 of the transmission/reception device 10, one communication link is used for regular-use communication, and the remaining two communication links are made to stand by. Accordingly, when the determiner 15 determines that the regular-use communication path has abnormality, the connection manager 12 can switch one of the stand-by communication paths to be a regular-use communication path. Therefore, even if a sudden communication delay or the like occurs, it is possible to realize control with a constant period without any occurrence of delay or loss of control data.

The connection manager 12 of the transmission/reception device 10 establishes a communication link for each of the three transmitters 13, two communication links are used for regular-use communication, and output signals included in two signal packets are collated with each other. Only when the two output signals are the same, the output signals are applied and the output signals are output to the signal outputter 23. Accordingly, the accuracy of output signals can be further improved and it is possible to realize control taking functional safety of the output device 24 into consideration. Further, when the determiner 15 determines that there is abnormality in one of the regular-use communication paths, the connection manager 12 can switch the stand-by communication path to be a regular-use communication path. Therefore, even if a sudden communication delay or the like occurs, it is possible to realize control with a constant period without any occurrence of delay or loss of control data.

The connection manager 12 of the transmission/reception device 10 establishes a communication link for each of the three transmitters 13, the three communication links are used for regular-use communication, and output signals included in three signal packets are collated with one another. Only when two or more output signals are the same, the output signals are applied and the output signals are output to the signal outputter 23. Accordingly, the accuracy of output signals can be further improved and it is possible to realize control taking functional safety of the output device 24 into consideration.

When three output signals of the transmission/reception device 10 are not the same, the determiner 15 of the transmission/reception device 20 notifies, via the transmitter 13, the transmission/reception device 10 of the fact that, with an identifier identifying a transmitter 13 having transmitted an output signal that is not the same as other output signals, the relevant transmitter 13 is not operating normally. Accordingly, it becomes possible to ascertain any communication link having abnormality.

While certain embodiments have been described, these embodiments have been presented by way of example only, and are not intended to limit the scope of the inventions. Indeed, the novel devices, methods, and programs described herein may be embodied in a variety of other forms. Furthermore, various omissions, substitutions, and changes in the form of the devices, methods, and programs described herein may be made without departing from the spirit of the inventions.

## Claims

1. A transmission/reception device comprising:
a connecter configured to establish a communication link with a communication counterpart via a network; and
a determiner configured to determine a state of the communication link and to cause the connector to switch the communication link to be another communication link when the communication link is in a predetermined state.

2. The device of Claim 1, wherein the connector is configured to establish a new communication link via a network as the another communication link when the communication link is in the predetermined state.

3. The device of Claim 1, wherein
the connector has established two or more different communication links via a network in advance and is using at least one communication link of the two or more different communication links for normal transmission and reception, and
the connector is capable of using one of remaining communication links of the two or more different communication links for normal transmission and reception when a communication link being used for normal transmission and reception is in a predetermined state.

4. The device of Claim 3, further comprising a plurality of transmitters respectively corresponding to the two or more different communication links and capable of transmitting a signal via corresponding communication links.

5. The device of Claim 4, wherein at least one of the transmitters is designated as a regular-use transmitter used for the normal transmission and reception, and at least one of the transmitters is designated as a stand-by transmitter not used for the normal transmission and reception.

6. The device of Claim 4, wherein the transmitters are each configured to transmit a signal at least including same data via a corresponding communication link.

7. The device of Claim 3, wherein the determiner is configured to collate signals at least including same data respectively received via the two or more different communication links and to apply the signals when the data included in the signals are same.

8. The device of Claim 4, wherein the determiner is configured to collate signals at least including same data respectively received via three different communication links, to apply the signals when two or more pieces of the data are same, and to determine that a transmitter having transmitted different data has abnormality.

9. The device of Claim 7, wherein the determiner is configured to determine a case in which number of events where pieces of the data are not same exceeds a predetermined number as the predetermined state.

10. The device of any one of Claims 1 to 8, wherein the determiner is configured to determine a case in which number of events where a reception interval of signals received via a same communication link exceeds a threshold exceeds a predetermined number as the predetermined state.

11. The device of any one of Claims 1 to 8, wherein the determiner is configured to determine a case in which number of unreceived signals among signals having serial numbers given thereto and received via a same communication link exceeds a predetermined number as the predetermined state.

12. The device of any one of Claims 1 to 8, wherein the determiner is configured to determine a case in which number of events where a response time that is a difference between a transmission timing of a transmitted transmission signal and a reception timing when a response signal of the transmission signal is received exceeds a threshold exceeds a predetermined number as the predetermined state.

13. The device of any one of Claims 1 to 8, further comprising a control operation part configured to generate a second signal to be used for control, based on a first signal having been received via the communication link.

14. The device of Claim 13, wherein the determiner is configured to determine the state based also on information obtained via a network.

15. The device of Claim 13, wherein the determiner is configured to perform at least any of notifying an e-mail address specified in advance of abnormality, popping up a message box on a displayer, illuminating a panel light, and causing the control operation part to generate a second signal for making the device fail-safe, when the communication link is in the state.

16. The device of any one of Claims 1 to 8, wherein a second signal having been received via the communication link to be used for control is output to an output device.

17. A control system comprising a server device and a communication device, wherein
the server device comprises
a connector configured to establish a communication link with a communication counterpart via a network,
a determiner configured to determine a state of the communication link and to cause the connector to switch the communication link to be another communication link when the communication link is in a predetermined state, and
a control operation part configured to generate a second signal to be used for control, based on a first signal having been received via the communication link, and
the communication device is configured to
transmit the first signal obtained from an input device to the first transmission/reception device via the communication link, and
output the second signal having been received via the communication link to an output device.
